# EUROPEAN PATENT SPECIFICATION

(11) **EP 0 184 266 B1**
(45) Date of publication and mention of the grant of the patent: **12.05.1993**
(21) Application number: 85202004.9
(22) Date of filing: 29.11.1985
(51) Int. Cl.: A01K 31/17, A01K 31/04, A01K 1/03

(54) **Device for keeping animals**
Vorrichtung zum Halten von Tieren
Dispositif pour l'élevage d'animaux

(30) Priority: 07.12.1984 NL 8403730
(43) Date of publication of application: 11.06.1986
(73) Proprietor: Malestein, Teus, Nl-3771 VC Barneveld (NL)
(72) Inventor: Malestein, Teus, Nl-3771 VC Barneveld (NL)
(74) Representative: de Wit, Gerard Frederik

(56) References cited:
- DE-A- 1 607 349
- DE-A- 3 238 244
- DE-C- 540 420
- FR-A- 1 086 493
- FR-A- 1 417 622
- FR-A- 1 574 834
- FR-A- 2 334 291
- FR-A- 2 488 489
- GB-A- 1 169 886
- US-A- 1 597 107

## Description

The invention relates to a device for keeping animals as described in the preamble of claim 1.

Such a device is known from FR-A-2 334 291.

This French specification describes in the opening paragraphs a device for keeping animals having an excrements removal belt which supports the animals and moves slowly to remove the excrements. According to this patent specification such a device has the disadvantage, that the excrements may harden before the belt has moved out of the cages, which may be organized in long rows. Consequently the hardened excrements will be present in at least part of the cages and cause brest blisters for for instance broilers or laying hens and other inconveniences.

Further this patent specification describes a system having a plurality of movable perforated carpets located below cages laying above each other, the end of said carpets being connected to each other by means of cables. The excrements fall through the perforations on a fixed sheet.

In practice it is difficult to have the carpet sufficiently pervious to remove the excrements completely, so that brest blisters still will be possible, whereas further such a pervious bottom is inconvenient for the animals. Moreover the bulk of the excrements fall on the sheets and have to be removed, which often requires much labour due to the hardening of the excrements.

Further DE-B-540 420 describes a device for keeping animals having a movable excrements removal belt. In both the publications the support of the belt or belts and the cages form a simple integrated unit.

The invention aims to improve living conditions of the animals relating to the floor on which they live and to provide a system enabling removal of the animals in their own cages.

Accordingly the invention provides a cage set as defined in claim 1. It has been shown, that it is easily possible to remove the cages from the belts without leaving a free space of sufficient height to allow the grown up animals to escape.

The invention is based on the insight, that a fodder and drink providing system bearing supports for movable excrements removal belts and suitable shaped movable cage sets, which can be put into a cooperating position with respect to the system enable to have the animals living on excrements removal belts and nevertheless allowing to remove them in the cages in which they have been kept. This latter feature is far more animal friendly than putting them in transport cages and safes a considerable amount of work.

According to a further aspect of the invention a system is provided as described in claim 2.

This embodiment of the invention has not only the advantages that no tilting bottom is necessary, but also that the laying hens will behave more quiet, wherewith a laying nest mostly is attractive, especially when it is located above the floor and little or not illuminated.

A room and space saving embodiment is obtained by the features of claim 3.

A further embodiment consists in that laying nests are supported by said service system, the cages and nests being so constructed that the nest may be shifted into the cages when moving the cage set towardds the service system and that an open connection between the nests and the inside of the cages exists when the nests have been shifted into the cages.

This embodiment has the advantage, that more room in the cages is present when the cages are used for transport purposes. Further the connection between the nests and the cages is made automatically, the closure of the cages being maintained for instance by wall parts pivotably mounted at their upper side, which pivot upwardly when the cages engage the nests.

The invention will in the following be elucidated on hand of the drawing, in which:
figure 1 schematically shows a cross-section through an embodiment of the invention for laying hens; and
figure 2 schematically shows an embodiment for broilers.

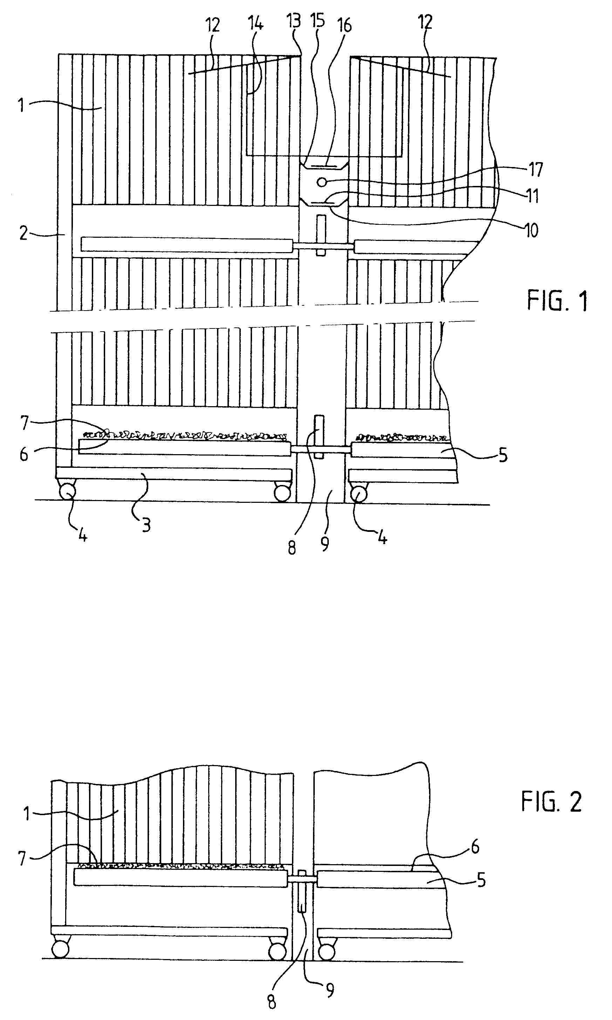

In fig. 1 reference 1 indicates a cage having no bottom, mounted to a riding frame, which has vertical uprights 2 and a horizontal girder part 3, which at its upper side has a supporting layer, for instance in the shape of a netting bottom. The riding system can be ridden on wheels 4. To the vertical uprights 2 a number of bottomless cages are mounted by means of suitable constructions having a mutual interspace, which cages each have vertical walls and a ceiling.

Between two such cages 1 rollers 5 are mounted, which protrude from a fixed frame 9 and on which rollers a excrements belt 6 may run, which is provided with litter 7.

In the shown embodiment the rollers 5 are vertically adjustably mounted to the frame 9 by means of an oblong hole connection 8, which frame contains a fodder gutter 10 with a conveyor 11 to convey fodder in a horizontal direction through the gutter 10. Embodiments of such fodder gutters have been depicted in the older not published patent application in the name of applicant.

According to the invention the portion 12 of the right wall of cage 1 is pivotable about a pivot axis 13. When the cage 1 and the row laying nests 14 are moved towards each other, the portion 12 pivots upward about the axis 13. The row laying nests 14 is supported by the fixed frame 9, so that the shown mutual position of cage 1 and the row laying nests 14 is realized by riding the riding frame toward the fixed frame 9.

The row laying nests 14 may have a tilting gutter, wherewith the eggs cann roll through openings in the bottom on a egg receiving gutter 15 which in a manner known per se is provided with a belt 16 for egg removal.

It is pointed to it, that laying nests per se are known in different embodiments and also per se are no part of the invention.

As appears from the drawing it is possible to use the same row of laying nests 14 for the cage 1 and for a corresponding cage located at the other side of the frame 9, wherewith, however, preferably the laying nests have alternating a closed wall at the side of the one row of cages or that of the other row.

When applying the invention riding frames have a length of preferably 1,20 m, which means that two of them can be located juxtapositioned in a truck. The rollers 5 may have a smaller diameter than shown in the drawing and may even consist of thin bars.

In the position shown in fig. 1 the rollers 5 and thereon the excrements disposal belt 6 are practically in their lowest position. This is also the position in which the device is used for laying hens and (with absence of a row of laying nests) for broilers at the end of their growing period.

Therewith the belt 6 may rest on the ceiling of the cage located below it or on the netting grid of the horizontal girder 3. This has the advantage, that a support of the belt is obtained when the load is highest, i.e. when the animals are most heavy. In practice the vertical walls of the cages have a height of for instance 33 cm and the lower edges of the vertical walls may for instance be located 7 cm above the excrements disposal belt. Though this is stretched it will nevertheless sag, but the slit between the lower side of the cages and the excrements disposal belt is insufficient for grown up hens to pass below them.

When on the contrary chickens are brought in, the lower side of the vertical walls of the cage 1 is located nearly immediately above the excrements disposal belt 6.

There may be, when this is necessary or desired, in the longitudinal direction of the riding frames, also perpendicular to the drawing of fig. 1 or 2, a certain interspace between the riding systems, where then a roll 5 for supporting the disposal belt 6 is located. When the animals are put into the cages 1, these can be ridden to their location, wherewith in case of laying hens the wall portions 12 pivot automatically. When chickens are brought in, the height position of the excrements disposal belt 6 can be lowered in the measure they grow.

When laying hens or fattened broilers are present in the cages, the riding frames can be simply ridden away, wherewith the distance between the lower side of the side walls and the upper side and the ceiling of the cage located below it respectively the netting bottom 3, is sufficiently small to prevent the animals to escape.

When applying the invention for laying hens the case may occur, that these in the beginning do not dispose all their eggs in the laying nests. Removal of these eggs in practice causes all laying hens to use the laying nests.

In fig. 2 the same references have been used as in fig. 1. The important difference with fig. 1 is, that here the frame 9 is narrower which for broilers is desired or sufficient. Further the rollers 5 are here in their highest position in the slits 8 in order to reduce the distance between these rollers and the lower side of the vertical walls of the cages 1.

In fig. 1 at 17 an illumination has been shown, which is located very favourable there, because the gutter 15 and the bottom of the laying nests prevent, that the laying nests are illuminated, whereas the fodder in the fodder gutter 10 just is strongly illuminated. Both effects are favourable. Of course for the illumination 17 each suitable type of light source may be used.

It will be clear, that when applying the invention it is not necessary, that use is made of cages, which are rideable with respect to a fixed fame. Also it is not necessary, that the sketched service system with a fodder supply gutter in which a transport chain or suchlike is present, is used when applying the invention.

Further it will be clear, that many variations of the invention are possible. So it is for instance possible, that not the rollers 5, but the cage constructions such as 1 are vertically adjustable, for instance by giving the rideable cages a variable height position. The invention has also the important advantage, that the animals have less contacts with their excrements and can lay their eggs in a more hygienic way, when laying hens are considered and that therewith it is possible to meet their need to scratch without inducing therewith a considerable cost increase.

## Claims

1. Device for keeping animals, provided with at least one cage set, each having a plurality of four-sided cages (1) having vertical walls and a ceiling and located in a plurality of levels above each other, a free space below the cages of each level, which space is only limited by constructional parts (2), which form a support structure for all cages of a set and at least one service system having a fixed frame (9) and means for supplying fodder to a number of rows of cages located on a plurality of levels above each other, **characterized** in that the said constructional parts are only present at one of the four sides of each cage, which side is called the back side, in that the lower side of each cage (1) has an open connection with the free space below the considered cage, in that the height of the free space below each cage is sufficient to receive an excrements removal belt (6) movably supported by the service system by means protruding from the fixed frames (9) into the free spaces of the cage set from the side thereof opposite the back side, the cage set being freely movable with respect to the service system.

2. Device according to claim 1, or cage set according to claim 1, **characterized** by laying nests (14) located above the lower side of the cages.

3. Device according to claim 2, **characterized** in that two rows of cages located at the same level are provided with laying nests, said nests having a common egg removal belt (16).

4. Device according to claim 1, **characterized** in that laying nests are supported by said service system, the cages and nests being so constructed that the nests may be shifted into the cages when moving the cage set towards the service system and that an open connection between the nests (14) and the inside of the cages exists when the nests have been shifted into the cages.

5. Device according to claims 2, 3 or 4, **characterized** in that below the laying nests an illumination (17) is located which keeps the laying nests almost inilluminated.

## Patentansprüche

1. Vorrichtung zum Halten von Tieren mit wenigstens einem Käfig-Satz, von denen jeder mehrere vierseitige Käfige (1) mit vertikalen Wänden und einer Decke aufweist und die in mehreren Ebenen übereinander angeordnet sind, wobei unterhalb der Käfige in jeder Ebene ein freier Raum ist, der nur durch Bauteile (2) begrenzt ist, die für alle Käfige eines Satzes ein Traggestell bilden sowie wenigstens ein Zuführsystem, das einen festen Rahmen (9) hat sowie Vorrichtungen zum zuführen von Futter zu mehreren Käfigreihen, die auf mehreren Ebenen übereinander angeordnet sind,
dadurch **gekennzeichnet,**
daß die Bauteile (2) nur an derjenigen der vier Seiten jedes Käfigs (1) vorhanden sind, der als Rückseite bezeichnet wird, und
daß die untere Seite jedes Käfigs (1) zum freien Raum unter dem jeweiligen Käfig in offener Verbindung steht, daß die Höhe des freien Raumes unter jedem Käfig dazu ausreicht, ein Kot-Förderband (6) aufzunehmen, das im Zuführsystem mit Hilfe von Einrichtungen bewegbar gelagert ist, die von den festen Rahmen (9) von derjenigen Seite, die der Rückseite gegenüberliegt, in die freien Räume des Käfigsatzes vorspringen, wobei der Käfigsatz in bezug auf das Zuführsystem frei beweglich ist.

2. Vorrichtung oder Käfig-Satz nach Anspruch 1, gekennzeichnet durch Lege-Nester (14), die oberhalb der Unterseite der Käfige angeordnet sind.

3. Vorrichtung nach Anspruch 2, dadurch gekennzeichnet, daß zwei Reihen von Käfigen, die auf derselben Ebene angeordnet sind, mit Lege-Nestern versehen sind, wobei diese Nester ein gemeinsames Eier-Förderband (16) haben.

4. Vorrichtung nach Anspruch 1, dadurch gekennzeichnet, daß die Lege-Nester durch das Zuführ-System abgestützt sind, wobei die Käfige und die Nester so gebaut sind, daß die Nester in die Käfige dann eingeschoben werden können, wenn der Käfig-Satz auf das Zuführsystem zu verschoben wird und daß zwischen den Nestern (14) und dem Inneren der Käfige dann eine Verbindung besteht, wenn die Nester in die Käfige eingeschoben worden sind.

5. Vorrichtung nach den Ansprüchen 2, 3 oder 4, dadurch gekennzeichnet, daß unterhalb der Lege-Nester eine Beleuchtung (17) angeordnet ist, die die Lege-Nester so gut wie unbeleuchtet läßt.

## Revendications

1. Dispositif pour loger des animaux, comprenant au moins un ensemble de cages dont chacun comporte plusieurs cages (1) à quatre faces avec des parois verticales et un plafond, montées l'une au-dessus de l'autre, à plusieurs niveaux, un espace libre sous les cages de chaque niveau, lequel espace est limité uniquement par des éléments de construction (2), qui forment une structure support pour toutes les cages d'un ensemble et au moins un système de service ayant un bâti fixe (9) et un moyen pour délivrer de la nourriture à un certain nombre de rangées de cages, installées l'une au-dessus de l'autre, à plusieurs niveaux, caractérisé en ce que lesdits éléments de construction ne sont présents que sur une des quatre faces de chaque cage, cette face étant appelée face arrière, en ce que la face inférieure de chaque cage (1) comprend un raccord ouvert avec l'espace libre situé au-dessous de la cage en question, en ce que la hauteur de l'espace libre au-dessous de chaque cage est suffisant pour recevoir une bande mobile d'enlèvement des excréments, supportée par le système de service grâce à des moyens sortant des bâtis fixes (9) et pénétrant dans les espaces libres de l'ensemble des cages par la face opposée à la face arrière, l'ensemble des cages étant librement mobile par rapport au système de service.

2. Dispositif selon la revendication 1, ou ensemble de cages selon la revendication 1, caractérisé en ce qu'il comprend des nids de ponte (14) placés au-dessus de la face inférieure des cages.

3. Dispositif selon la revendication 2, caractérisé en ce que deux rangées de cages, situées au même niveau, sont équipées de nids de ponte, lesdits nids ayant en commun une bande (16) d'enlèvement des oeufs.

4. Dispositif selon la revendication 1, caractérisé en ce que ces nids de ponte sont supportés par ledit système de service, les cages et les nids étant construits de manière que les nids puissent être glissés dans les cages en déplaçant les cages vers le système de service et en ce qu'il existe un raccord ouvert entre les nids (14) et l'intérieur des cages lorsque les nids ont été glissés dans les cages.

5. Dispositif selon les revendications 2, 3 ou 4, caractérisé en ce que, au-dessous des nids de ponte, est installé un éclairage (17) qui maintient les nids de ponte éclairés.
